# EUROPÄISCHE PATENTSCHRIFT

(11) **EP 2 065 698 B1**
(45) Veröffentlichungstag und Bekanntmachung des Hinweises auf die Patenterteilung: **19.07.2017**
(21) Anmeldenummer: 08020309.4
(22) Anmeldetag: 21.11.2008
(51) Int. Cl.: G01N 21/64, G01N 21/31, B01L 3/00

(54) **Chip zum Analysieren eines Mediums mit integriertem organischem Lichtemitter und Verfahren zur Herstellung eines solchen Chips**
Chip for analysing a medium with integrated organic light emitter and process of manufacturing such a chip
Puce destinée à l'analyse d'un milieu à l'aide d'un émetteur de lumière organique intégré et procédé pour fabriquer une telle puce

(30) Priorität: 22.11.2007 DE 102007056275
(43) Veröffentlichungstag der Anmeldung: 03.06.2009
(73) Patentinhaber: Fraunhofer-Gesellschaft zur Förderung der angewandten Forschung e.V., 80686 München (DE)
(72) Erfinder: Leo, Karl, 01219 Dresden (DE); Vogel, Uwe, 01129 Dresden (DE)
(74) Vertreter: Stöckeler, Ferdinand

(56) Entgegenhaltungen:
- WO-A-2005/103652
- US-A1- 2003 035 755
- U. VOGEL ET AL.: "OLED-on-CMOS Integration for Optoelectronic Sensor Applications" PROCEEDINGS OF THE SPIE, Bd. 6477, 8. Februar 2007 (2007-02-08), Seiten 647703-1-647703-8, XP002519281
- ROMAN ET AL: "Fully integrated microfluidic separations systems for biochemical analysis" JOURNAL OF CHROMATOGRAPHY, ELSEVIER SCIENCE PUBLISHERS B.V. AMSTERDAM, NL, Bd. 1168, Nr. 1-2, 2. Oktober 2007 (2007-10-02), Seiten 170-188, XP022282437 ISSN: 0021-9673
- Y H Chen ET AL: "Analysis of DNA fragments by microchip electrophoresis fabricated on poly(methyl methacrylate) substrates using a wire-imprinting method", Electrophoresis, 1 January 2000 (2000-01-01), pages 165-170, XP055202392, GERMANY DOI: 10.1002/(SICI)1522-2683(20000101)21:1<165: :AID-ELPS165>3.0.CO;2-I Retrieved from the Internet: URL:http://www.ncbi.nlm.nih.gov/pubmed/106 34483 [retrieved on 2015-07-15]
- HU Y ET AL: "PHOTOTRANSISTOR PROPERTIES OF PENTACENE ORGANIC TRANSISTORS WITH POLY(METHLY METHACRYLATE) DIELECTRIC LAYER", JAPANESE JOURNAL OF APPLIED PHYSICS, JAPAN SOCIETY OF APPLIED PHYSICS, JP, vol. 45, no. 1, 1 January 2006 (2006-01-01), pages L96-L98, XP001245483, ISSN: 0021-4922, DOI: 10.1143/JJAP.45.L96

## Beschreibung

Die vorliegende Erfindung bezieht sich auf einen Chip zum Analysieren eines Mediums mit einem integrierten organischen Lichtemitter und insbesondere auf ein monolithisch integriertes lab-on-chip Bauelement mit einer OLED-Lichtquelle (OLED = Organic Light Emitting Diode).

Mikro-Arrays werden heute in der medizinischen Diagnostik vielfältig verwendet. Dabei wird beispielsweise eine gitterförmige Anordnung (Array oder Matrix-Anordnung) von kleinen Behältern oder Töpfen auf eine Oberfläche realisiert, in denen biologisch aktive Substanzen (das Medium) eingebracht werden können. Das Array kann beispielsweise mit einem Serum wie beispielsweise Blut benetzt oder bedeckt werden, so dass untersucht werden kann, wie aus dem Serum gesuchte Substanzen in den verschiedenen Töpfen des Arrays fixiert werden. Somit kann gleichzeitig das Serum in den verschiedenen Töpfen hinsichtlich verschiedener Inhaltsstoffe parallel untersucht wird. Eine übliche Auswerte-Technik ist dabei optisch, wobei das Serum (Substanz) durch eine externe Lichtquelle beispielsweise zur Fluoreszenz angeregt wird und die Fluoreszenz durch ein externes Instrument wie beispielsweise ein abbildendes Mikroskop detektiert wird. Um eine hohe Sensitivität zu erreichen, sollte die Anordnung hohe Anforderungen hinsichtlich Detektivität und Homogenität erfüllen. Anschließend kann in einem externen Computer eine Auswertung des sich ergebenden Musters von den Untersuchungen in den verschiedenen Töpfen des Arrays erfolgen.

Eine hybride Integration von Lichtemitter und Lichtdetektor, beispielsweise in Form einer Verschaltung vorgefertigter Bauelemente, erfordert prinzipiell einen hohen Fertigungsaufwand und erlaubt gerade bei hohen Stückzahlen keine generelle Preisdegression. Weiterhin lässt sich aufgrund der hybriden Aufbauweise eine notwendige Zuverlässigkeit nur mit extrem hohem Kostenaufwand erzielen.

Als Lichtemitter kommen Leuchtdioden in Betracht, wobei herkömmliche Leuchtdioden (LED = Light Emitting Diodes) aus anorganischen Halbleitern wie beispielsweise GaAs und verwandten III-V-Halbleiter seit Jahrzehnten bekannt sind. Das Grundprinzip solcher konventionellen Leuchtdioden ist stets, dass durch Anlegen einer elektrischen Spannung Elektronen und Löcher in einen Halbleiter injiziert werden und in einer Rekombinationszone unter Lichtaussendung strahlend kombinieren. Leuchtdioden auf der Basis anorganischer Halbleiter haben für viele Anwendungen empfindliche Nachteile. Da sie auf einkristallinen Substraten realisiert werden, können sie nur auf III-V-Halbleiteruntergründen aufgebracht werden oder, sofern dies nicht möglich ist, aufwendig auf einem Fremdsubstrat montiert werden.

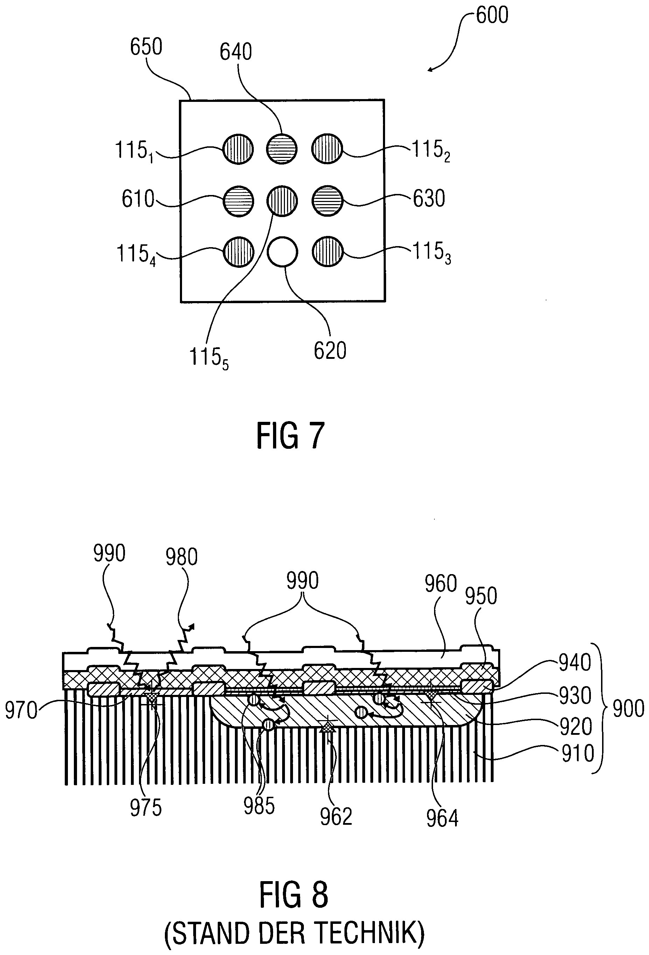

Photodioden als mögliche Lichtempfänger bzw. Photodetektoren lassen sich in einem Standard-CMOS-Prozess (CMOS = Complementary Metal Oxide Semiconductor) an verschiedenen pn-Grenzflächen abbilden und Fig. 8 zeigt ein Beispiel in einem n-Wannen-CMOS-Prozess gemäß dem Stand der Technik. Hierbei ist in einem p-dotierten Substrat (p-Substrat) 910 ein n-dotiertes Gebiet oder Wanne (n-Wanne) 920 gebildet, die an der dem p-Substrat 910 abgewandten Seite eine p⁺-dotierte Schicht 930 aufweist. Als Abschlussschicht für den Photodetektor weist das p-Substrat 910 eine Oxidschicht 940 auf, woran sich übliche CMOS-Schichten wie beispielsweise eine ILD-Schicht 950 (ILD = Inter-Layer-Dielectricum) und eine IMD-Schicht 960 (IMD = Inter-Metal-Dielectricum) anschließen. Die Oxidschicht 940, die ILD-Schicht 950 als auch die IMD-Schicht 960 weisen vorzugsweise ein dielektrisches Material auf und sind lichtdurchlässig. Unter Umständen kann die Oxidschicht 940 zumindest bereichsweise lichtundurchlässig sein. Verschiedene pn-Übergänge sind in Fig. 8 durch Dioden 962, 964 und 975 gekennzeichnet.

Einfallende Lichtstrahlen 990 erzeugen in der n-Wanne 920 ein Ladungsträgerpaar 985 mit entgegengesetzt geladener Polarität, welches entsprechend der Polarität getrennt wird und ein elektrisches Signal verursacht. Die unterschiedlichen Photodetektoren, die durch die Dioden 962, 964 und 975 realisiert sind, können, jeweils spektral verschieden,wahlweise oder kombiniert genutzt werden. Die Diode 962 wird dabei von dem p-Substrat 910 und der n-Wanne 920, und die Diode 964 durch die n-Wanne 920 und eine p⁺-dotierte Schicht 930 gebildet. Fig. 8 zeigt außerdem eine Photodiode 975, die aus einem pn-Übergang von p-Substrat 910 und einer n⁺-dotierten Oberflächenschicht 970 gebildet wird. Die Lichtsignale 980 stellen beispielsweise an der Oberflächenschicht 970 reflektiertes Licht dar.

Als Alternativen aus anorganischen Leuchtdioden haben Leuchtdioden auf der Basis organischer Halbleiter in den letzten Jahren große Fortschritte erzielt. Wesentliche Vorteile der organischen Elektrolumineszenz sind, dass organische Leuchtdioden durch die chemische Variabilität mit praktisch allen Farben hergestellt und aufgrund der Abscheidung bei niedrigen Temperaturen auf verschiedenste Substrate aufgebracht werden können.

Organische Leuchtdioden weisen meist eine organische Schichtfolge zwischen einer Anode und einer Kathode auf, wobei die organische Schichtfolge beispielsweise eine Schichtdicke von ca. 100 nm aufweisen kann. Im üblichen Fall wird Glas als Substrat verwendet, auf das eine transparent leitende Oxidschicht, die beispielsweise Indium-Zinnoxid (ITO) aufweisen kann, aufgebracht. Im Anschluss daran folgt zumeist eine organische Schichtfolge, die beispielsweise ein Löcher transportierendes Material, ein emittierendes Material, und ein Elektronen transportierendes Material aufweisen kann. Als Abschluss wird meist eine metallische Kathode aufgebracht.

Im Allgemeinen wird zwischen organischen Lichtemittierenden Dioden (OLEDs) als Top-Emitter und OLEDs als Bottom-Emitter unterschieden. Typischerweise strahlen Bottom-Emitter das Lichtsignal hauptsächlich durch das Substrat währenddessen Top-Emitter in eine Richtung von dem Substrat weg strahlen.

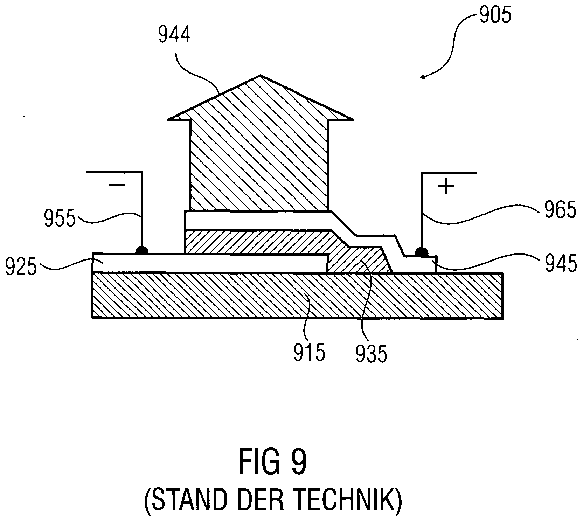

Fig. 9 zeigt ein Beispiel, das nicht unter die Ansprüche fällt und eine organische Licht-emittierende Diode (OLED) 905 enthält, die als ein Top-Emitter ausgelegt ist. Hierbei sind auf einem Substrat 915 eine Elektrode 925, eine organischen Schichtfolge 935 und eine transparenten Elektrode 945 aufgebracht. Die Kontaktierung erfolgt über einen Anschluss 955 an die Elektrode 925 sowie über einen Anschluss 965 an die transparente Elektrode 945. Das Substrat 915 weist meist ein nicht-transparentes Material und die Elektrode 925 beispielsweise ein Metall auf. Das hat zur Folge, dass bei Anlegen einer entsprechenden Spannung an den Anschlüssen 955 und 965 ein, in der organischen Schichtfolge 935 erzeugtes Lichtsignal 944, in der gezeigten Darstellungsweise durch die transparente Elektrode 945 (beispielsweise aus ITO) nach oben emittiert wird.

Die Integration einer OLED in einem CMOS-Chip für eine Lichtschranke ist beispielsweise in U. Vogel et al., "OLEDon-CMOS Integration for Optoelectronic Sensor Applications" proceedings of the SPIE 6477 (8. Februar 2007) Seiten 647703-1 bis 647703-8 beschrieben.
Bekannte Lösungen für Analysegeräte sind beispielsweise US 6,331,438 B1, US 2003/0035755A1, WO 2005/103652 A1, WO 2005/108963 A1 und US 7,170,605 B2 beschrieben. In US 6,331,438 B1 wird eine Integration von einer analytischsensitiven Layer mit einer Dünnfilm-elektrolumineszenten Layer und Photodetektor in Array-Form beschrieben, das für Untersuchungen von biologischen, chemischen oder physikalischem Analyten geeignet ist. Die in dieser Patentschrift vorgeschlagenen Substratmaterialien gestatten jedoch keine Integration aktiver elektronischer Elemente für eine Signalverarbeitung auf dem Chip. In US 2003/0035755 A1 ist ein Biochip unter Nutzung eines organischen Elektrolumineszenz-Gerätes offenbart, wobei das elektrolumineszente lichtemittierende Gerät als ein Substrat mit Lichtquelle oder Heizung für den Biochip dient. WO 2005/103652 A1 offenbart einen optoelektronischen Biochip, wobei sowohl der Lichtemitter als auch der Photodetektor auf einem Chip monolithisch integriert sind. Hierbei erfolgt die Lichtausbreitung von dem Lichtemitter in die entgegengesetzte Richtung zu der Lichtausbreitung zu dem Photodetektor. In WO 2005/108963 A1 ist ein mikrofluidisches Zellsortiersystem offenbart, welches ausgebildet ist, um Zellsubkulturen zu separieren, zu reinigen und zu zählen, wobei eine optische Analyse zur Detektion genutzt wird. In US 7,170,605 B2 wird ein aktives Sensor-Array für eine DNA-Analyse beschrieben, welches eine Mehrzahl von integrierten Lichtquellen und Photodetektoren zur Sample-Analyse darstellt. Diese Patentschrift offenbart ebenfalls die Möglichkeit, Filter in den Lichtweg einzubringen und einer Ansteuerung der einzelnen Lichtquellen des Arrays. Die Auswertung der entsprechenden Signale kann durch eine Steuereinheit vorgenommen werden.

Konventionelle Analysegeräte sind dahingehend nachteilig, dass sie entweder herkömmliche LEDs auf der Basis von III-V-Halbleitern nutzen und dementsprechend meist in hybrider Bauweise hergestellt werden. Diese hybride Bauweise erfordert prinzipiell einen höheren Fertigungsaufwand und damit verbunden höhere Herstellungskosten. Ferner ist eine hybride Bauweise häufig eine Quelle von Fehlern oder Störungen (mangelnde Zuverlässigkeit), die insbesondere die Lebensdauer des Bauelementes einschränkt.

Ausgehend von diesem Stand der Technik liegt der vorliegenden Erfindung die Aufgabe zugrunde, einen Analyse-Chip zu schaffen, der sowohl den Lichtemitter als auch den Photodetektor in monolithisch integrierter Form bereitstellt.

Diese Aufgabe wird durch einen Chip nach Anspruch 1 und ein Verfahren zur Herstellung nach Anspruch 15 gelöst.

Der vorliegenden Erfindung liegt die Erkenntnis zugrunde, dass durch eine Integration eines OLED-Emitters auf ein weitgehend strukturiertes CMOS-Substrat eine monolithische Integration einer Lichtquelle und eines Photodetektors auf einem Chip möglich ist. Die Integration der OLED kann in einem Abschlussprozess oder mittels eines sogenannten "Post Processing" (Nachverarbeitung) geschehen. Strukturen des CMOS-Aufbaus können dabei gleichzeitig als elektrischer Isolator und Lichtleiter wirken. Als Photodetektor kommen an pn-Sperrschichten sich ausbildende, somit CMOS-inhärente Photodioden, Phototransistoren oder ähnliche Elemente zur Anwendung.

Ausführungsbeispiele der vorliegenden Erfindung beschreiben somit einen Chip zum Analysieren eines Mediums, wobei der Chip einen organischen Lichtemitter, einen Photodetektor, eine Schichtfolge und ein Reservoir aufweist. Der organische Lichtemitter emittiert ein Lichtsignal, das durch eine Detektorfläche des Photodetektors in den Photodetektor eintreten kann. Die Schichtfolge trennt den organischen Lichtemitter und die Detektorfläche und das Medium ist in dem Reservoir einbringbar. Somit sind der organische Lichtemitter und der Photodetektor durch einen Strahlengang des Lichtsignals optisch koppelbar, wobei das Reservoir in dem Strahlengang des Lichtsignals angeordnet ist.

Der Photodetektor kann beispielsweise in einem Substrat, welches Silizium aufweist, ausgebildet sein (z.B. in Form eines pn-Überganges). Durch die Verbindung von SiliziumSubstraten mit organischen Bauelementen ist es ermöglich, die für lab-on-chip beschriebenen Funktionen in einer integrierten Weise auszuführen. Dies umfasst z.B. die folgenden drei Punkte:
1. können in das Silizium spektral sensitive Detektoren integriert werden, die in der Lage sind, die verschiedenen Fluoreszenz-Farbstoffe direkt ohne eine weitere Verwendung von Filtern zu detektieren. Dadurch ist ein besonders einfaches Auslesen der Signaldaten möglich.
2. können organische Leuchtdioden integriert werden, die eine sehr homogene und gleichmäßige Beleuchtung erzielen und darüber hinaus eine sehr effiziente und einfache Einkopplung ergeben.
3. kann bei einer solchen Aufbauweise die Bearbeitung der Signals vom Medium direkt mit einer Schaltung auf dem Siliziumsubstrat vorgenommen werden, so dass keine weitere externe Logik (oder Schaltung) erforderlich wird. Somit ist es insbesondere möglich, auf einem einzigen Chip eine vollkommen autonome Auswertung solcher Daten vorzunehmen, wodurch zum Einen extern teure Geräte wegfallen und zum Anderen die Möglichkeit besteht, beispielsweise einem Patienten selbst ein solches Gerät auszuhändigen und es ggf. als Wegwerfsystem zu benutzen.

Eine gleiche Funktionalität kann bei weiteren Ausführungsbeispielen durch Verwendung anderer Halbleitermaterialien ebenfalls erreicht werden.

Bei Ausführungsbeispielen kann beispielsweise das Reservoir als ein Reagenz-Reservoir oder als Mikrokanal in der CMOS-Struktur - beispielsweise in einer der Oxidschichten - ausgebildet sein. Optional ist es ferner möglich, dass bei weiteren Ausführungsbeispielen ein Filter zwischen dem Photodetektor und dem Reservoir angeordnet sein kann und die Messgröße des Photodetektors kann beispielsweise die Extinktion oder Absorption des Lichtsignals umfassen. Dabei kann beispielsweise eine durch die Bestrahlung des Mediums in dem Reservoir verursachte Fluoreszenz oder Phosphoreszenz gemessen werden. Konkret kann entweder die Wellenlänge oder die Abklingdauer der von dem Medium im Reservoir ausgehenden Strahlung gemessen werden. Unter ausgehender Strahlung ist dabei hier und im Folgenden nicht nur jene Strahlung zu verstehen, die in dem Medium erzeugt wird, sondern auch durch das Medium reflektierte oder Strahlung, die das Medium durchlaufen hat.

Es ist beispielsweise möglich, dass die von dem Medium infolge der Fluoreszenz/Phosphoreszenz ausgehende Strahlung eine andere Wellenlänge aufweist als das Licht, das von dem organischen Lichtemitter erzeugt wird. Das optionale Filter kann in einem solchen Fall beispielsweise dazu benutzt werden, den Anteil des ursprünglichen Lichtsignals herauszufiltern, so dass nur das von dem Medium infolge der Fluoreszenz/Phosphoreszenz ausgehende Licht in den Photodetektor eintreten kann und dort detektiert werden kann. Es ist beispielsweise möglich, dass eine Bestrahlung eines Mediums mit UV-Strahlung dazu führt, dass das Medium im sichtbaren Spektralbereich fluoresziert. Es ist demnach nicht erforderlich, dass die OLED sichtbares Licht aussendet. Wenn das Filter somit Störlicht herausfiltert, das zu messende Licht jedoch passieren lässt, ist somit eine deutliche Erhöhung der Sensitivität möglich. Die Abklingdauer gibt dabei ein Zeitintervall an, innerhalb dessen die Intensität des Lichtsignals sich um einen vorbestimmten Faktor (z.B. ½, ¼, 1/10 oder 1/e, e= Eulerzahl) ändert. Die Abklingdauer ist insbesondere wichtig zur Unterscheidung von fluoreszierenden und phosphoreszierenden Bestandteilen in dem Medium, da die Phosphoreszenz im Gegensatz zur Fluoreszenz ein deutlich längeres Nachleuchten des Mediums bewirkt (z.B. um mehr das 10-fache).

Bei weiteren Ausführungsbeispielen weist der Photodetektor eine organische photovoltaische Zelle zur Photodetektion auf. Ferner können Ausführungsbeispiele organische/anorganische Materialien oder Schichten aufweisen, die eine spezifische optische Filterwirkung haben und beispielsweise in Verbindung mit weißen OLED als Emitter verwendet werden können.

Weitere Ausführungsbeispiele beschreiben eine Integration von aktiven elektronischen Elementen zur Signalverarbeitung in einem Bereich des Substrats, indem bzw. oberhalb dem die OLED ausgebildet ist und lateral vom Photodetektor verschoben sein kann.

Bei weiteren Ausführungsbeispielen ist der CMOS-Photodetektor durch ein Design bzw. eine Sperrschichtauswahl derart ausgebildet, dass eine entsprechende spektrale Filterwirkung erreicht wird und der Photodetektor somit insbesondere hinsichtlich eines spezifischen spektralen Bereichs sensitiv ist. Bei weiteren Ausführungsbeispielen ist eine Matrix-Anordnung gewählt, so dass mehrere Photodetektoren und/oder mehrere Lichtemitter nebeneinander flächenförmig angeordnet sind, so dass gleichzeitig in paralleler Art und Weise mehrere Untersuchungen des Mediums (Serums) vorgenommen werden können. Es ist ebenfalls möglich, dass das Reservoir ebenfalls mehrere Bereiche aufweist, die entweder miteinander verbunden sein können oder auch getrennt nebeneinander (in Array-Form) angeordnet sein können.

Bei weiteren Ausführungsbeispielen wird insbesondere die Absorptionsspektroskopie ausgenutzt, bei der es vorteilhaft ist, das Medium mit einer weißen OLED zu beleuchten, so dass durch eine Untersuchung von der durch das Medium ausgehende Strahlung das Absorptionsspektrum untersucht werden kann.

Bei weiteren Ausführungsbeispielen weist das Reservoir Kavitäten auf, die beispielsweise Mikro-Resonatoren darstellen können oder Teil eines Resonators sind, so dass die von dem Medium ausgehende Strahlung durch die in den Mikro-Resonatoren stehende Welle beeinflusst oder verändert (z.B. hinsichtlich der Wellenlänge, Abklingdauer, etc.) werden können.

Ausführungsbeispiele der vorliegenden Erfindung bieten somit eine Reihe von Verbesserungen und Vorteile gegenüber konventionellen Lösungen. Diese Vorteile umfassen beispielsweise eine monolithische Integration der Lichtquelle und des Photodetektors auf einen CMOS-Chip, wobei die Emitterfläche der Lichtquelle nahezu beliebig geometrisch strukturierbar ist. Ferner ist es möglich, verschiedene Emitter-Wellenlängen nebeneinander zu integrieren - beispielsweise durch nebeneinander angeordnete OLEDs mit verschiedenen Wellenlängen. Es ist ebenso möglich, ein Gebiet unterhalb der OLED- oder Sender-Fläche (von der das Licht ausgesendet wird), für eine aktive Schaltung zu nutzen, wobei die aktive Schaltung beispielsweise eine Signal- und Informationsverarbeitung umfassen kann. Es kann dabei vorteilhaft sein, CMOS-inhärente Metallisierungen als Abschirmebenen zu nutzen, um die aktive Schaltung vor Störeinflüssen infolge einer Lichteinstrahlung zu schützen.

Ausführungsbeispiele der vorliegenden Erfindung ermöglichen ferner einen Verzicht auf Farbfilter, bei der spektralen Auswahl der Detektoren und erlauben eine Kontrolle der Beleuchtungshomogenität. Somit erlauben Ausführungsbeispiele eine deutliche Reduktion der Chipfläche, eine Reduzierung der externen Elektronik und eine Reduzierung von AVP-Kosten (AVT = Aufbau- und Verbindungstechnik) und sind somit beispielsweise für eine Point-of-Care-Diagnose geeignet. Entsprechende Geräte können beispielsweise einem Patienten an die Hand gegeben werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Querschnittsansicht durch einen Analyse-Chip mit einer OLED als Bottom-Emitter und einem Photodetektor gemäß einem Ausführungsbeispiel;
- Fig. 2: eine Querschnittsansicht durch einen Analyse-Chip mit einem optionalen Filter;
- Fig. 3: eine Querschnittsansicht durch einen Analyse-Chip, wobei die OLED als ein indirekt auf den Photodetektor strahlender Bottom-Emitter ausgelegt ist;
- Fig. 4: eine Querschnittsansicht durch einen Analyse-Chip, wobei die OLED als ein indirekt auf einen Photodetektor strahlender Top-Emitter ausgelegt ist;
- Fig. 5: eine Draufsicht auf eine mögliche Sensoranordnung für eine sogenannte lab-on-chip-Anwendung;
- Fig. 6: eine Draufsicht auf eine mögliche Anordnung als Fluoreszenz-Sensor;
- Fig. 7: eine Draufsicht auf eine mögliche Anordnung für einen Spektral- oder Farbsensor;
- Fig. 8: eine Querschnittsansicht durch eine Photodiode im Standard-n-Wannen-CMOS-Prozess gemäß dem Stand der Technik; und
- Fig. 9: eine Querschnittsansicht durch eine organische Leuchtdiode als Top-Emitter gemäß dem Stand der Technik.

Bevor im Folgenden die vorliegende Erfindung anhand der Zeichnungen näher erläutert wird, wird darauf hingewiesen, dass gleiche Elemente in den Figuren mit gleichen oder ähnlichen Bezugszeichen versehen sind, und dass eine wiederholte Beschreibung dieser Elemente weggelassen wird.

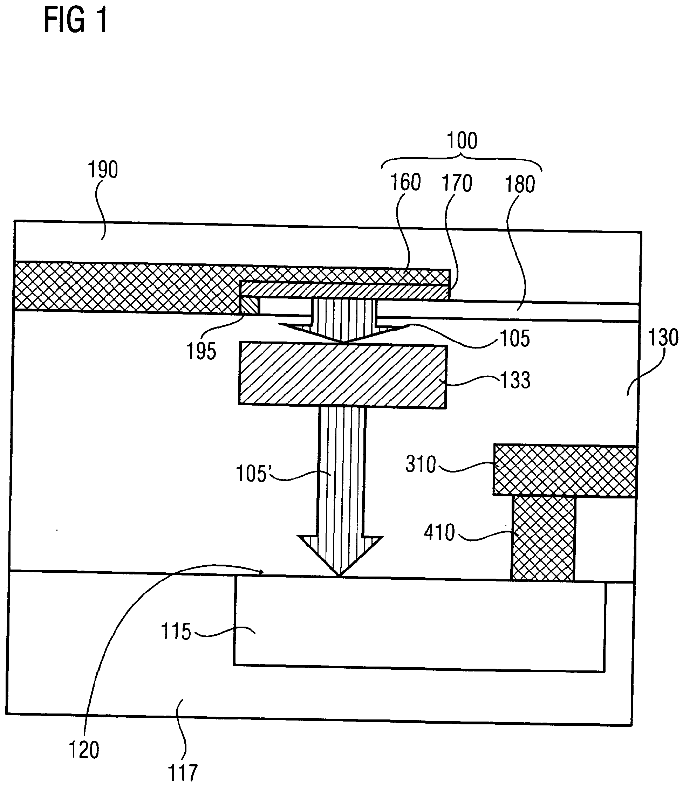

Fig. 1 zeigt ein Beispiel, welches nicht unter die Ansprüche fällt, bei dem ein Photodetektor eine Photodiode 115 aufweist, die beispielsweise durch einen pn-Übergang einer n-Wanne zu einem Substrat 117 oder zu einer p⁺-dotierten Oberflächenschicht gebildet sein kann (oder auch einen anderen vorhandenen pn-Übergang nutzt). Die Photodiode 115 weist eine Detektorfläche 120 auf und wird über den Kontakt 410 mit einer Abschirmebene 310 kontaktiert. Weitere Kontakte des Photodetektors sind der Einfachheit halber wiederum nicht dargestellt. Der Photodetektor 115 und die OLED 100 sind durch eine Schichtfolge 130 getrennt, die ein Reservoir 133 aufweist. Das Reservoir 133 kann als ein Reagenz-Reservoir oder Mikrokanal ausgebildet sein und dem zu untersuchenden Medium (z.B. Serum) als Behälter dienen. Es kann somit gleichzeitig als Probenhalterung dienen. Die OLED 100 weist eine transparente Elektrode 180 eine organische Schichtfolge 170 und eine zweite Elektrode 160 auf, wobei die transparente Elektrode 180 auf der Schichtfolge 130 abgeschieden ist. Der Chip wird abschließend durch eine Passivierung 190 geschützt. Die seitliche Isolierung 195 bewirkt eine elektrische Trennung der transparenten Elektrode 180 und der zweiten Elektrode 160.
Ein von der OLED 100 erzeugte Lichtsignal 105 passiert somit das Reservoir 133 und das von dem Reservoir 133 ausgehende Lichtsignal 105' tritt in den Photodetektor 115 über die Detektorfläche 120 ein.

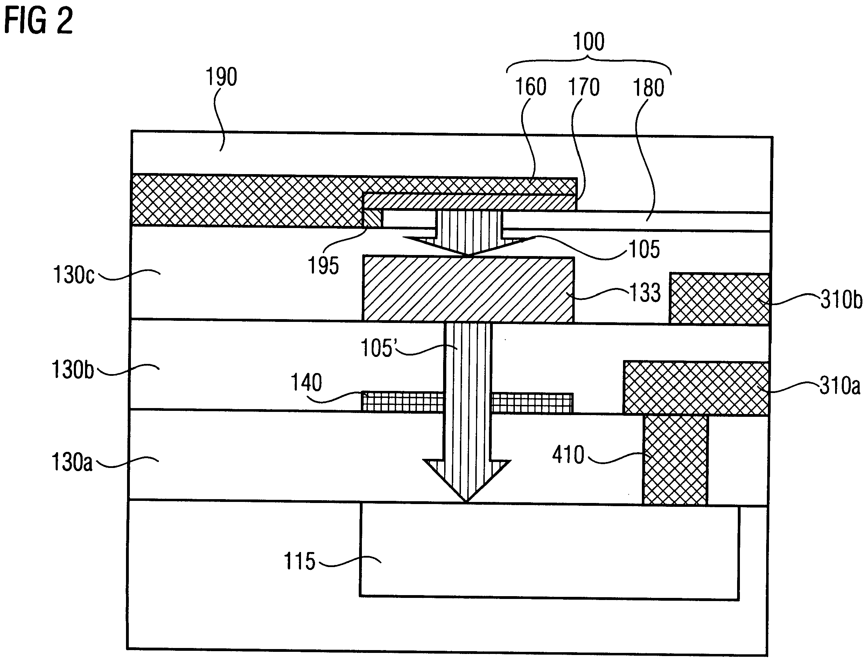

In Fig. 2 ist ein Ausführungsbeispiel gezeigt, das sich von dem in Fig. 1 gezeigten Ausführungsbeispiel dadurch unterscheiden, dass zum einen die Schichtfolge 130 CMOS-typische Bestandteile aufweist, beispielsweise ist eine ILD-Schicht 130a (ILD = Inter Layer Dielectricum), gefolgt von einer IMD1-Schicht 130b (IMD = Inter Metal Dielectricum) und einer IMD2-Schicht 130c angeordnet. Die IMD1-Schicht 130b weist eine Abschirmebene 310a und die IMD2-Schicht 130c eine Abschirmebene 310b auf.

Der Photodetektor 115 ist dabei mit der Abschirmebene 310a über eine Brücke bzw. Durchkontaktierung 410, die die ILD-Schicht 130a überbrückt, verbunden. Die Abschirmebene 310a dient somit dem elektrischen Anschluss des Kontakts 410. Die ILD-Schicht 130a dient als Schutz für die Photodiode 115 und das p-Substrat 117. Die ILD-Schicht 130a, die IMD1-Schicht 130b und die IMD2-Schicht 130c sind wiederum typische Bestandteile einer CMOS-Struktur, ebenso wie die Abschirmebenen 310a und 310b, die beispielsweise durch Metallleitungsebene der CMOS-Struktur implementiert sein können. Auch die zweite Elektrode 160 kann durch eine CMOS Metallisierung einfach realisiert werden. Das in Fig. 2 gezeigte Ausführungsbeispiel weist ferner einen optionalen Filter 140 auf, der hier in der IMD1-Schicht 130b ausgebildet ist, wobei das Filter 140 auch in anderen Schichten ausgebildet sein kann.

Die OLED als bottom-Emitter 100 erzeugt von einem elektrischen Eingangssignal das Lichtsignal 105, das die IMD2-Schicht 130c passiert und in das Reservoir 133 eintritt. Das vom Reservoir 133 ausgehende Lichtsignal 105' passiert die IMD1-Schicht 130b, den optionalen Filter 140 und die ILD-Schicht 130a, bevor es in die Photodiode 115 eintritt und dort ein elektrisches Ausgangssignal generiert. Das elektrische Ausgangssignal kann als Messgröße die Extinktion, Absorption, Fluoreszenz, etc. des vom Reservoir 133 ausgehende Lichtsignal 105' messen.

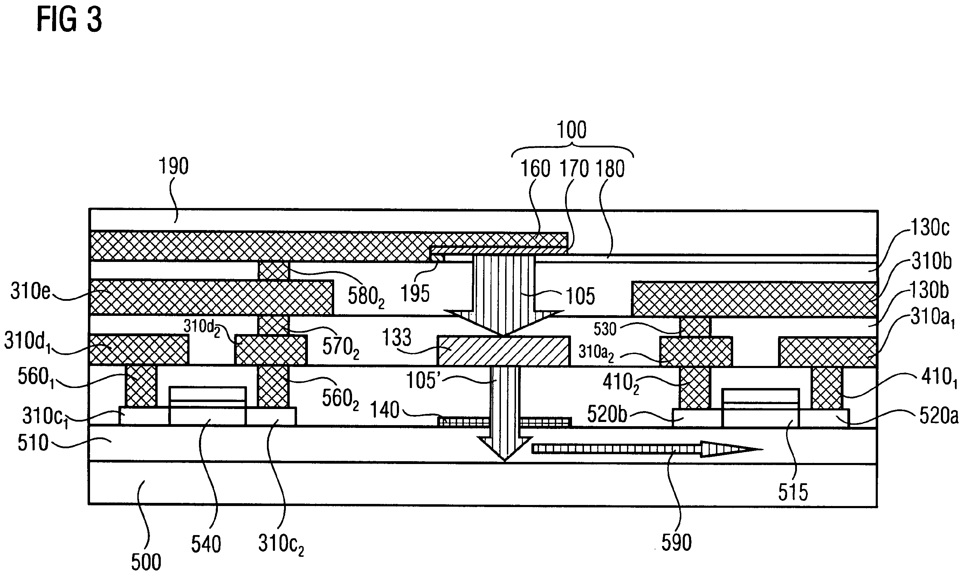

Fig. 3 zeigt ein Ausführungsbeispiel, bei dem die OLED 100 unter Verwendung einer vergrabenen dielektrischen, transparenten Schicht 510, die als Lichtleiter dient, indirekt auf einen Photodetektor 515 strahlt. Die dielektrische, transparente Schicht 510 (die auch als vergrabene Schicht oder "buried layer" bezeichnet werden kann) ist auf einem Substrat 500 abgeschieden und dient als Grundlage für den Photodetektor 515 und einen OLED-Treibertransistor 540. Der Photodetektor 515 und der OLED-Treibertransistor 540 sind in die ILD-Schicht 130a eingebettet und auf der ILD-Schicht 130a ist wiederum die IMD1-Schicht 130b und die IMD2-Schicht 130c abgeschieden. Die IMD2-Schicht dient ferner als Substrat für die anschließende OLED 100 mit der transparenten Elektrode 180, der organischen Schichtfolge 170 und der zweiten Elektrode 160, die wiederum in eine Passivierung 190 eingebettet ist und die seitliche Isolierung 195 liefert eine Isolation zwischen der transparenten Elektrode 180 und der zweiten Elektrode 160.

Der Photodetektor 515 wird über einen ersten Kontakt 520a und einen zweiten Kontakt 520b elektrisch kontaktiert. Der erste Kontakt 520a ist über eine erste Brücke 410₁ mit einem ersten Teil 310a₁ der Abschirmebene 310a verbunden. Der zweite Kontakt 520b ist über eine zweite Brücke 410₂ mit einem zweiten Teil 310a₂ der Abschirmebene 310a verbunden und der zweiten Teil 310a₂ ist seinerseits über eine dritte Brücke 530 mit der Abschirmebene 310b verbunden. Eine elektrische Kontaktierung des OLED-Treibertransistors 540 erfolgt über einen ersten Teil 310c₁ und über einen zweiten Teil 310c₂ der Abschirmebene 310c. Der erste Teil 310c₁ ist über eine fünfte Brücke 560₁ mit einem ersten Teil 310d₁ der Abschirmebene 310d verbunden. Der zweite Teil 310c₂ ist eine sechste Brücke 560₂ mit einem zweiten Teil 310d₂ der Abschirmebene 310d verbunden. Der zweite Teil 310d₂ ist seinerseits über eine siebte Brücke 570₂ mit der Abschirmebene 310e, die wiederum über eine achte Brücke 580₂ mit der zweiten Elektrode 160 der OLED 100 elektrisch verbunden ist.

Wie zuvor beschrieben, sind die Abschirmebenen 310b und 310e in die IMD2-Schicht 130c und die Abschirmebenen 310a und 310d in die IMD1-Schicht 130b eingebettet. Andererseits weist die ILD-Schicht 130a die Teile 310c₁ und 310c₂ der Abschirmebene 310c als auch die Kontakte 520a und 520b auf. Die als Abschirmebenen bezeichneten Strukturen sind hierbei jeweils durch Abschnitte von Metallleitungsebenen einer CMOS-Struktur implementierbar und dienen über jeweilige Brücken bzw. Durchkontaktierungen zumindest teilweise ferner als Anschlussstrukturen.

Bei diesem Ausführungsbeispiel trifft das Lichtsignal 105, welches von der OLED 100 als Bottom-Emitter emittiert wird auf das Reservoir 133 und das von diesem ausgehende Lichtsignal 105' passiert den optionalen Filter 140 und trifft auf die eingearbeitete dielektrische, transparente Schicht 510, die als Lichtwellenleiter dient. Das Lichtsignal 105' erzeugt dabei in der dielektrischen, transparenten Schicht 510 ein Lichtsignal 590, welches sich in Richtung zu dem Photodetektor 515 ausbreitet und dort ein elektrisches Signal erzeugt, welches über die Kontakte 520a und 520b ausgegeben wird. Wie oben beschrieben ist der erste Kontakt 520a mit dem ersten Teil 310a₁ der Abschirmebene 310a und der zweite Kontakt 520b mit der Abschirmebene 310b verbunden, wo das elektrische Signal als das Ausgangssignal anliegt.

Es ist vorteilhaft für die Teile der Abschirmebenen 310a₁, 310a₂, 310b, 310c₁, 310c₂, 310d₁, 310d₂ und 310e Metallleitungsebenen der CMOS-Struktur zu verwenden, die beispielsweise in Fig. 3 schematisch dargestellt sind. Das Ausführungsbeispiel von Fig. 3 basiert demzufolge auf einer SOI-CMOS-Technologie mit einer vergrabenen Oxidschicht, die der dielektrischen, transparenten Schicht 510 entspricht und gleichzeitig als elektrischer Isolator und Lichtleiter genutzt wird. Damit kann trotz gegebenenfalls komplexer Integration von Emitteransteuer- und Photodetektorausleseelektronik eine hohe Isolationsspannung erzielt werden. Beide Schaltungsteile befinden sich völlig voneinander isoliert auf einem Chip. Um eine möglichst hohe Absorption durch den Photodetektor 515 zu erreichen, sollte der Photodetektor 515 entsprechend groß gewählt werden. Eine aktive Schicht, die beispielsweise Silizium aufweist und auf der dielektrischen, transparenten Schicht 510 vorgesehen ist, sollte also ausreichend dick ausgeführt sein, um eine hohe Photonenabsorptionswahrscheinlichkeit zu erlangen. Beispielhaft könnte eine Schichtdicke gewählt werden, die in einem Bereich von etwa 200nm bis etwa 3 µm liegt. Das Reservoir 133 und das optionale Filter können dabei wie in Fig. 1 und 2 beschrieben ausgebildet sein.

Die in Fig. 3 mit den Bezugszeichen 310d₁, 310d₂, 310a₁ und 310a₂ bezeichneten Strukturen können dabei jeweils Teile einer ersten Metallleitungsebene (MET1) einer CMOS-Struktur sein, die Strukturen 310b und 310e können Teile einer zweiten Metallleitungsebene (MET2) sein, und die Struktur 160 kann Teil einer dritten Metallleitungsebene (MET3) sein. Bei weiteren Ausführungsbeispielen ist, anstatt des OLED-Treibertransistor 540, eine vollständige Auswerte- und Steuereinheit integriert.

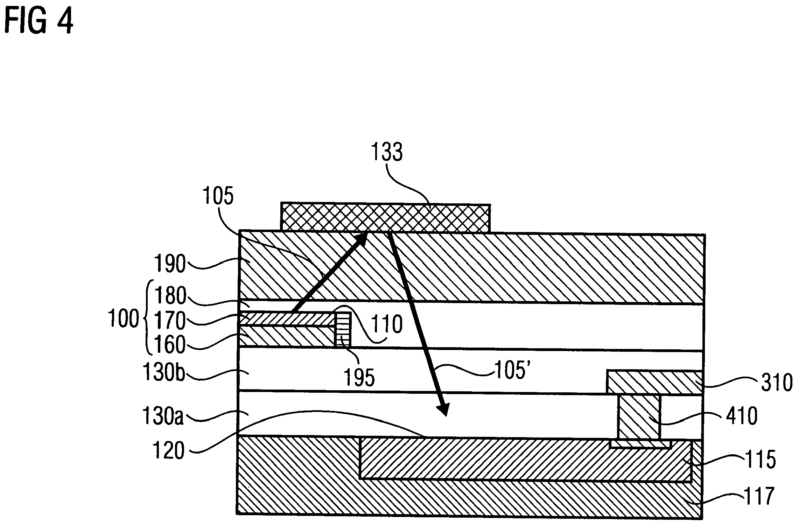

Fig. 4 zeigt ein Beispiel, welches nicht unter die Ansprüche fällt, bei dem eine OLED 100 als Top-Emitter verwendet wird, die indirekt auf den Photodetektor 115 strahlt. Wie bei dem Vergleichsbeispiel, welches im Kontext von Fig. 2 erläutert wurde, weist der Photodetektor 115 die Photodiode (die durch einen vorhandenen pn-Übergang gebildet wird) auf, die über den Kontakt 410 kontaktiert wird und in das p-Substrat 117 eingebettet ist. Der Kontakt 410 wird dabei mit einer Metallleitungsebene 310 der CMOS-Struktur verbunden. Die Metallleitungsebene 310 befindet sich in der IMD1-Schicht 130b, die sich wiederum an die ILD-Schicht 130a anschließt.
Die OLED 100 ist auf die IMD1-Schicht 130b aufgebracht, wobei eine auf der IMD1-Schicht 130b gebildete Metallleitungsebene (MET2) als untere Elektrode 160 dient, auf die die organische Schichtfolge 170 und die transparente Elektrode 180 aufgebracht sind. Als Schutz für die OLED als top-Emitter 600 folgt schließlich die Passivierung 190, die ein transparentes Material aufweist. Die seitliche Isolierung 195 liefert auch hier eine Isolation zwischen der transparenten Elektrode 180 und der zweiten Elektrode 160. Die zur Kontaktierung dienenden Strukturen 310 und 160 können wiederum inhärente Teile der CMOS-Struktur sein, als Metallleitungsebenen ausgestaltet sein und zusätzlich als Abschirmungsebenen dienen.

Ein Reservoir ist bei diesem Vergleichsbeispiel auf der Passivierung 190 ausgebildet. Das Reservoir ist dabei derart angeordnet, dass ein Lichtsignal 105 von der OLED 100, die als Top-Emitter wirkt auf das Reservoir trifft und das ausgehende Lichtsignal 105' auf den Photodetektor 115 reflektiert wird, d.h. das Lichtsignal 105 wird in Richtung des Reservoirs abgestrahlt und gelangt als Lichtsignal 105' in die Photodiode 115, die in das p-Substrat 117 eingebettet ist. Bei dieser reflektierenden Anordnung strahlt also die OLED 100 nach oben, d. h. in Richtung der Passivierung 190. Wie in Fig. 4 ersichtlich, ist bei einer Ausgestaltung darauf zu achten, dass der Photodetektor 115 nicht von der Abschirmebene 310 verdeckt wird, so dass ein möglichst großer Teil des vom Reservoir ausgehenden Lichtsignals 105' den Photodetektor 115 erreicht.

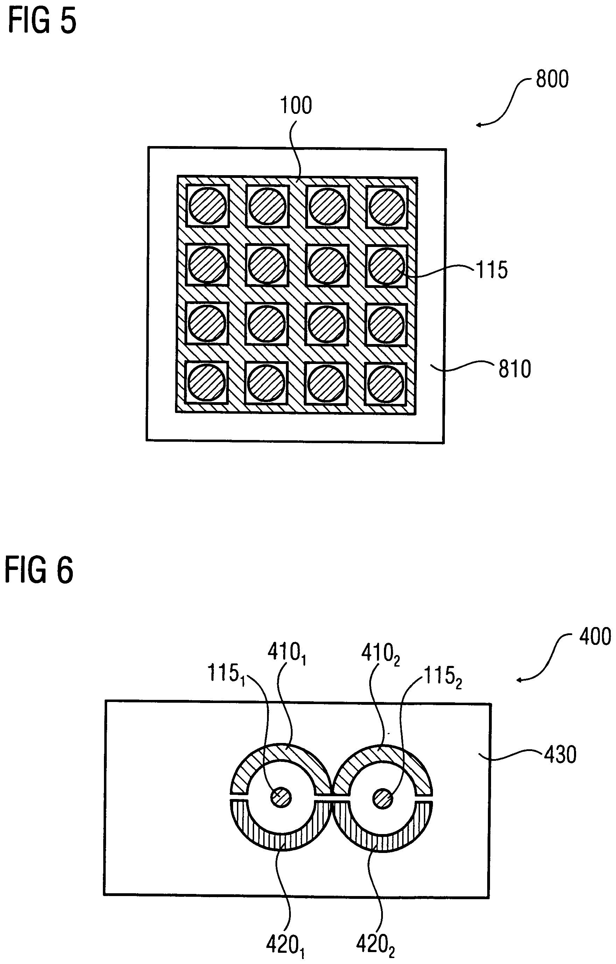

Fig. 5 zeigt eine Draufsicht eines Beispiels für eine mögliche Sensoranordnung 800, die für eine Lab-on-Chip-Anwendung geeignet ist, aber nicht unter die Ansprüche fällt. Auf einem Chip 810 befindet sich dabei eine gitterförmig ausgestaltete OLED 100 und Photodetektoren (gestrichelte Bereiche) 115 in den jeweiligen Zwischenräumen. Unter Benutzung von Photodetektoren verschiedener spektraler Empfindlichkeit ist es möglich, einen bestimmten Anteil vom ausgehenden Lichtsignal 105' (beispielsweise einen mit einer bestimmten Farbe fluoreszierenden Anteil) gezielt festzustellen bzw. deren Bewegung oder Veränderung zu erfassen. Das Reservoir kann in Form verschiedener Töpfe an einer Oberfläche der Sensoranordnung 800 ausgebildet sein. In diesem Fall kann die OLED 100 als Topemitter angeordnet sein. Anderseits ist es ebenfalls möglich, dass das Reservoir als ein Kanalsystem (bspw. in einer Oxidschicht) ausgebildet sein, wobei die OLED 100 dann als Bottom Emitter ausgebildet sein kann.

Bei weiteren Vergleichsbeispielen ist die gitterförmig angeordnete OLED aus einer Vielzahl von balken- oder zeilenförmig ausgestalteten OLEDs aufgebaut. Dadurch kann bei dieser Sensoranordnung auch eine Position bestimmter Stoffe oder Objekte auf dem Chip bestimmt werden. Durch geeignete OLEDs, die bestimmte Stoffe oder Bestandteile von Flüssigkeiten anregen, können mit dieser Sensoranordnung auch Konzentrationen des bestimmten Stoffes in Abhängigkeit von der Position auf dem Chip festgestellt werden. Ebenso ist eine Erfassung von zeitlichen Veränderungen (z.B. der Konzentration eines fluoreszierenden Stoffes) möglich.

Fig. 6 zeigt eine Draufsicht auf eine mögliche Sensoranordnung 400, welche nicht unter die Ansprüche fällt, die insbesondere als ein Fluoreszenzsensor geeignet ist. Die Sensoranordnung 400 weist beispielsweise zwei grüne OLEDs 410₁ und 410₂ sowie zwei blaue OLEDs 420₁ und 420₂ auf, die Teil einer Schaltung 430 sind. In dieser Draufsicht sind zwei Photodetektoren 115₁ und 115₂ zwischen den grünen OLEDs 410₁ und 410₂ sowie den blauen OLEDs 420₁ und 420₂ angeordnet, so dass sich die grünen OLEDs 410₁ und 410₂ sowie die blauen OLEDs 420₁ und 420₂ im Idealfall in gleicher Entfernung von den Photodetektoren 115₁ und 115₂ befinden. Bei weiteren Ausführungsbeispielen können noch weitere OLEDs und/oder Photodetektoren vorgesehen sein. Ebenso sind Kombinationen mit weiteren Farben bzw. eine Verwendung von OLEDs anderer Farbe möglich. Dabei erweist es sich jedoch als vorteilhaft, dass bei weiteren Varianten die verschiedenen OLEDs eine möglichst gleiche Entfernung zu den Photodetektoren 115₁ und 115₂ aufweisen. Durch verschiedene Farben kann eine Fluoreszenz von Stoffen angeregt werden und die entsprechende Fluoreszenz-Strahlung, die meist in eine andere Wellenlänge abgestrahlt wird, kann detektiert und deren zeitliches Abklingverhalten (d.h. die schwächer werdende Intensität) gemessen werden. Somit können die in Frage kommenden Stoffe anhand der Fluoreszenz nachgewiesen werden. Dabei ist es vorteilhaft, wenn die Photodetektoren 115₁ und 115₂ eine erhöhte Sensitivität für die entsprechende durch Fluoreszenz verursachte Strahlung aufweisen. Es ist ebenfalls möglich, einen Teil der Photodetektoren, z.B. den Photodetektor 115₂, in Verbindung mit einem Teil der OLEDs, z.B. den OLEDs 420₂ und 410₂, für eine Referenzmessung (z.B. probenlos) zu nutzen.

Fig. 7 zeigt eine Draufsicht einer Sensoranordnung 600, welche nicht unter die Ansprüche fällt, die insbesondere als möglicher Spektral-/Farb-Sensor geeignet ist. Dieses Vergleichsbeispiel weist vier verschiedene OLEDs auf. Eine blaue OLED 610, eine grüne OLED 620, eine rote OLED 630 und eine (nahe) infrarote OLED 640 sind zusammen mit Photodetektoren 115₁, 115₂, 115₃,... auf einem Chip 650, der bei diesem Vergleichsbeispiel eine viereckige Form aufweist, angeordnet. Dabei sind die Photodetektoren 115₁, 115₂, 115₃,... symmetrisch auf dem Chip 650 angeordnet, nämlich an jeder Ecke und in der Mitte befindet sich je ein Photodetektor. Die verschiedenfarbigen OLEDs sind entlang der vier Seitenlängen des Chips 650 angeordnet, wobei bei der hier gezeigten Draufsicht, die blaue OLED 610 links, die grüne OLED 620 unten, die rote OLED 630 rechts und die (nahe) infrarote OLED 640 oben angeordnet ist.

Die Wahl der Anordnung der OLEDs sowie die Farbgebung ist frei getroffen und die OLEDs können bei weiteren Vergleichsbeispielen entsprechend ausgetauscht werden. Ebenso ist die Anzahl der OLEDs und deren Farbe sowie die viereckige Form des Chips 650 nur beispielhaft und können bei weiteren Vergleichsbeispielen variieren. Es ist jedoch vorteilhaft, wenn die Photodetektoren 115₁, 115₂, 115₃,... möglichst nahe den verschiedenen OLEDs angeordnet sind, um eine ähnliche spektrale Empfindlichkeit (Sensitivität hinsichtlich eines Spektralbereiches) für alle Farben zu erhalten. Dabei sollte jedoch eine gegenseitige Störung infolge einer zu geringen Entfernung ausgeschlossen werden. Dieses Vergleichsbeispiel kann als Farbsensor genutzt werden, d.h. verschiedene Reflexionseigenschaften von farbigen Objekten bzw. Stoffen hinsichtlich farbigen Lichtes können gezielt detektiert und somit Objekte bzw. Stoffe nach deren Farbe unterschieden werden. Für diese Anwendung ist es insbesondere vorteilhaft, dass OLEDs in vielen Farben verfügbar sind. Im Unterschied zu der beschriebenen ähnlichen spektralen Empfindlichkeit kann es für bestimmte Anwendungen ferner sinnvoll sein, wenn die Photodetektoren 115₁, 115₂, 115₃, ... spektral verschieden empfindlich sind. Dies kann beispielsweise durch unterschiedliche Realisierungen (wie die unterschiedlichen Dioden 975, 964 und 962 in Fig. 8) geschehen. Die verschiedenen spektralen Empfindlichkeiten können beispielsweise an die jeweiligen Emitter spektral angepasst werden.

Bei den in den Fig. 5 bis 7 gezeigten Vergleichsbeispielen sind die OLEDs und die Photodetektoren in der Höhe versetzt und das Reservoir ist der besseren Anschaulichkeit weggelassen worden.

Die verwendeten Photodetektoren 115, die auf einem CMOS-Prozess basieren, können beispielsweise verschiedene spektrale Charakterista aufweisen. Ferner ist es möglich, organische lichtemittierende Dioden als Top-Emitter auf eine CMOS-Metallschicht als untere Elektrode zu integrieren. Der Photodetektor 115 kann als ein beliebiges in CMOS-Strukturen auftretendes lichtempfindliches Bauelement ausgelegt sein und beispielsweise eine Photodiode oder einen Phototransistor umfassen.

In der lab-on-chip-Anordnung strahlt die OLED oft nach oben ab (Top-Emitter), d.h. in Richtung der Passivierung und somit in entgegengesetzter Richtung zu dem Photodetektor 115. Die Probe, das Medium oder die Reagenz reflektiert das Licht, wobei es zur Absorption, Fluoreszenz oder Phosphoreszenz (statisch oder zeitaufgelöst) kommen kann, und lenkt das Licht 105' auf den Photodetektor 115 im Chip (in Substrat) zurück.

Neben den lichtemittierenden oder lichtdetektierenden Elementen kann eine Ansteuer- und Auswerte-Elektronik in den CMOS-Chip integriert werden (ein Beispiel war in Fig. 3 gezeigt). Eine solche Anordnung wiederum kann Teil einer komplexen integrierten Schaltung (IC) sein, welche als Mikrosystem zusätzlich eine optische Kopplerfunktion aufweisen kann. Die geometrische Anordnung von dem Lichtemitter 100 und von dem Detektor 115 kann den Erfordernissen der Messaufgabe angepasst werden. Hier kommt der Vorteil der großflächigen Abscheidung und Strukturierbarkeit von OLED 100 zum Tragen. Hinzu kommt, dass die von der OLED 100 beanspruchte Fläche im Untergrund durch eine aktive Schaltung genutzt werden kann, die nicht notwendigerweise mit der OLED-Steuerung verknüpft sein braucht.

Weitere Sensor-Geometrien sind realisierbar, die beispielsweise in der Anwendung der Fluoreszenz-Sensorik vorteilhaft sind. Hier kommen ggf. OLED-Emitter mit verschiedenen Wellenlängen zur Anwendung. Ebenso ist über die Auswahl von Photodetektoren 115 eine Anpassung der spektralen Empfindlichkeit der Photodetektoren 115 an die/den Emitter 100 möglich. Mit der spektralen Empfindlichkeit ist eine Sensitivität hinsichtlich eines Spektralbereiches verbunden und somit wird gleichzeitig eine Filterwirkung der Photodetektoren erreicht.

Die beschriebenen Ausführungsbeispiele der vorliegenden Erfindung können selbstverständlich auch kombiniert bzw. auch erweitert werden. Beispielsweise kann eine Fokussierung des Lichtsignals 105 über eine Optik erfolgen. Dies kann beispielsweise durch eine Linse oder ein Spiegelsystem erreicht werden und wäre dahingehend vorteilhaft, dass die Detektorfläche 120 des Photodetektors 115 entsprechend kleiner gewählt werden kann und trotzdem noch eine ausreichende Lichtmenge erhalten wird.

Ferner können während des Betriebes sowohl analoge als auch digitalisierte Signale genutzt werden. Um äußere Störeffekte beispielsweise von Fremdlicht effektiv unterdrücken zu können, kann es dabei vorteilhaft sein, eine fixierte Taktung bzw. eine Modulation zu verwenden.

Verschiedene Aspekte der vorliegenden Erfindung können somit wie folgt zusammengefasst werden:
Ausführungsbeispiele beschreiben eine Beleuchtung von biologischen, chemischen, physikalischen Proben durch gemeinsam auf einen aktiven CMOS-Substrat integrierte organische Halbleiter zur Beleuchtung und Photodetektoren 115 - und zwar auf einem CMOS-Silizium-Chip in einer Matrix-Anordnung. Der Photodetektor kann dabei beispielsweise einen anorganischen Halbleiter als aktive Schicht aufweisen, z.B. als ein CMOS-Photodetektor 115. Der CMOS-Photodetektor 115 kann bei Ausführungsbeispielen ein entsprechendes Design oder eine entsprechende Sperrschicht (Materialien, Dotierungen, Abmaße, etc.) aufweisen, um eine vorbestimmte spektrale Filterwirkung zu erreichen.

Bei weiteren Ausführungsbeispielen weist der Photodetektor 115 eine organische photovoltaische Zelle auf. Ferner kann durch eine Verwendung von organischen Materialien ein Filter realisiert werden.

Ausführungsbeispiele können somit zur AbsorptionsSpektroskopie verwandt werden, z.B. durch eine Beleuchtung mit einer weißen OLED und einer oben beschriebenen Filterung. Die weiße OLED bzw. das weiße Licht, das von der weißen OLED ausgesandt wird, kann beispielsweise unter Verwendung gestapelter Leuchtdioden erzeugt werden, wenn sich das Licht der einzelnen OLEDs durch Überlagerung zu weißes Licht ergänzt. Ausführungsbeispiele beschreiben ebenfalls eine Verwendung von OLED-Emittern mit verschiedenen Wellenlängen (verschiedene Farben). Es ist ebenso möglich, einen gepulsten OLED zu verwenden, um beispielsweise eine Zerfalldynamik der optischen Signale zu messen.

Bei weiteren Ausführungsbeispielen können Photodioden räumlich angeordnet sein, um die OLED-Helligkeit zu messen und damit eine Regelung der Homogenität zu erlauben.

Außerdem ist es möglich, einen Array aus Kavitäten zu realisieren, die Mikro-Resonatoren darstellen, wobei die Flüssigkeit oder das Medium durch eine Öffnung eintritt und eine Erhöhung der Absorptionslänge durch eine stehende Welle erreicht wird. Somit können Ausführungsbeispiele als ein spektraler Sensor oder als ein Fluoreszenz-Sensor verwendet werden.

Eine Informationsverarbeitung kann ebenfalls auf dem Chip oder auf dem Substrat durch aktive Elemente (eine CMOS-Schaltung, Bipolar-IC-Technologie, etc.) erreicht werden. Auch wenn Ausführungsbeispiele auf CMOS-Strukturen Bezug nehmen oder nutzen, so kann in Vergleichsbeispielen auch allgemein die MOS-Technologie oder die Bipolar-Technologie genutzt werden, d.h. Vergleichsbeispiele bedürfen nicht der Ausbildung eines p- und n-Kanal Transistors.

Mit der OLED-Technologie als Emitter bietet sich die Möglichkeit einer monolithisch integrierten Lösung, was sowohl die Bauelemente verkleinert als auch die Möglichkeit der Integration neuer Funktionen bietet. Ebenso lassen sich vielkanalige Lösungen auf einem Chip integrieren, wobei sowohl die zu untersuchende Probe bzw. deren Halterung ebenfalls auf dem Chip realisiert werden kann (z.B. mittels einem Mikrokanal oder Mikrokanalsystems).

Weitere Ausführungsbeispiele umfassen ebenfalls einen Chip, bei dem die weiteren Photodetektoren in einer Matrix-Anordnung ausgebildet sind, oder bei dem das Filter ein organisches Material umfasst, oder bei dem das Filter zwischen dem Reservoir 133 und dem Photodetektor 115 in den Strahlengang des Lichtsignals 105 einbringbar ist. Ausführungsbeispiele umfassen ferner einen Chip, bei dem der organische Lichtemitter 100 ausgebildet ist, weißes Licht auszusenden, oder bei dem der organische Lichtemitter 100 ausgebildet ist, gepulste Lichtsignale auszusenden, oder bei dem die weiteren Photodetektoren derart räumlich angeordnet sind, um eine Helligkeit des organischen Lichtemitters 100 zu messen, oder bei dem das Reservoir 133 ausgebildet ist, um ein Serum oder Blut als Medium zu nutzen. Schließlich umfassen Ausführungsbeispiele auch eine Verwendung eines Chips als lab-on-chip-Sensor, als Fluoreszenz-Sensor oder als spektraler Sensor.

## Patentansprüche

1. Chip zum Analysieren eines Mediums, mit folgenden Merkmalen:
einem organischen Lichtemitter (100) zum Emittieren eines Lichtsignals (105);
einem Photodetektor (115), der eine Detektorfläche (120) aufweist;
einer Schichtfolge (130) aus dielektrischen Schichten einer CMOS-Struktur, in denen Metallleitungsebenen (310b) der CMOS-Struktur gebildet sind, die den organischen Lichtemitter (100) und die Detektorfläche (120) trennt und als ein Substrat für den organischen Lichtemitter (100) dient; und
wobei der organische Lichtemitter (100) und der Photodetektor (115) durch einen Strahlengang des Lichtsignals (105) optisch koppelbar sind und ein Reservoir (133) in dem Strahlengang des Lichtsignals (105) angeordnet ist, **dadurch gekennzeichnet, dass** der organische Lichtemitter (100) als Bottom-Emitter ausgebildet ist, um das Lichtsignal (105) durch die als Substrat dienende Schichtfolge (130) abzustrahlen und dass der Chip das Reservoir (133) aufweist, in dem das Medium einbringbar ist und das als ein Kanal in der Schichtfolge (130) aus dielektrischen Schichten (130a; 130b; 130c) der CMOS-Struktur ausgebildet ist.

2. Chip nach Anspruch 1 der weitere organische Lichtemitter und/oder weitere Photodetektoren aufweist.

3. Chip nach Anspruch 2, bei dem die weiteren Photodetektoren eine spektrale Sensitivität aufweisen, die sich von der spektralen Sensitivität des Photodetektors (115) unterscheidet.

4. Chip nach einem der vorhergehenden Ansprüche, bei dem der Photodetektor (115) eine organische photovoltaische Zelle oder einen anorganischen Halbleiter als aktive Schicht aufweist.

5. Chip nach einem der vorhergehenden Ansprüche, der ferner ein Filter im Strahlengang des Lichtsignals (105) aufweist.

6. Chip nach Anspruch 5, bei dem der organische Lichtemitter (100) ausgelegt ist, das Lichtsignal (105) in einem spektralen Bereich auszusenden, und bei dem das Filter ausgebildet ist den spektralen Bereich herauszufiltern und einen Spektralbereich, für den der Photodetektor (115) sensitiv ist, passieren zu lassen.

7. Chip nach einem der vorhergehenden Ansprüche, bei dem der organische Lichtemitter (100) ausgebildet ist, das Lichtsignal (105) in einem spektralen Bereich auszusenden, und bei dem der Photodetektor (115) sensitiv für einfallendes Licht (105') in einem weiteren spektralen Bereich ist, wobei der spektrale Bereich von dem weiteren spektralen Bereich abweicht.

8. Chip nach einem der vorhergehenden Ansprüche, bei dem der organische Lichtemitter (100) eine Vielzahl von gestapelten Leuchtdioden aufweist, wobei die gestapelten Leuchtdioden ausgebildet sind, Licht auszusenden, so dass eine Überlagerung des von den gestapelten Leuchtdioden ausgesandte Licht weißes Licht ergibt.

9. Chip nach einem der vorhergehenden Ansprüche, bei dem der organische Lichtemitter (100) ausgebildet ist das Lichtsignal (105) in einem spektralen Bereich auszusenden, und der ferner einen weiteren organischen Lichtemitter aufweist, wobei der weitere organische Lichtemitter ausgebildet ist Licht in einem weiteren spektralen Bereich auszusenden, wobei der spektrale Bereich sich von dem weiteren spektralen Bereich unterscheidet.

10. Chip nach einem der vorhergehenden Ansprüche, bei dem der organische Lichtemitter (100) ausgebildet ist, gepulste Lichtsignale auszusenden.

11. Chip nach einem der vorhergehenden Ansprüche, der ferner eine Auswerte- und Steuereinheit (540) aufweist, wobei die Auswerte- und Steuereinheit (540) auf einem gleichen Substrat wie der Photodetektor (115) integriert ist.

12. Chip nach einem der vorhergehenden Ansprüche, bei dem das Reservoir Kavitäten aufweist, die Mikro-Resonatoren darstellen, so dass eine von dem Medium ausgehende Strahlung durch eine in den Mikro-Resonatoren stehende Welle beeinflusst oder verändert werden kann.

13. Chip nach einem der vorhergehenden Ansprüche, der ein weiteres Reservoir und einen weiteren Photodetektor aufweist, wobei das weitere Reservoir von dem Reservoir (133) räumlich getrennt ist und mit dem weiteren Photodetektor optisch koppelbar ist, und wobei der weitere Photodetektor eine von dem Photodetektor (115) abweichende spektrale Sensitivität aufweist.

14. Verwendung eines Chips nach einem der vorhergehenden Ansprüche als lab-on-chip-Sensor, als Fluoreszenz-Sensor oder als spektraler Sensor.

15. Verfahren zur Herstellung eines Chips zum Analysieren eines Mediums mit folgenden Schritten:
Ausbilden eines Photodetektors (115), der eine Detektorfläche (120) aufweist;
Ausbilden einer Schichtfolge (130) aus dielektrischen Schichten (130a; 130b; 130c) einer CMOS-Struktur auf der Detektorfläche (120) des Photodetektors (115), wobei in der Schichtfolge Metalleitungsebenen (310b) der CMOS-Struktur gebildet sind;
Ausbilden eines organischen Lichtemitters (100) zum Emittieren eines Lichtsignals (105), wobei die Schichtfolge (130) als ein Substrat für den organischen Lichtemitter (100) dient und die Schichtfolge (130) zwischen dem organischen Lichtemitter (100) und der Detektorfläche (120) angeordnet ist; und
wobei der organische Lichtemitter (100) und der Photodektor (115) derart ausgebildet werden, dass ein Strahlengang des Lichtsignals (105) den organischen Lichtemitter (100) und den Photodetektor (115) optisch koppelt, und wobei ein Reservoir (133) in dem Strahlengang des Lichtsignals (105) ausgebildet wird, **dadurch gekennzeichnet, dass** der organische Lichtemitter (100) als Bottom-Emitter ausgebildet wird, um das Lichtsignal (105) durch die als Substrat dienende Schichtfolge (130) abzustrahlen und dass das Reservoir (133), in dem das Medium einbringbar ist, als ein Kanal in der Schichtfolge (130) aus dielektrischen Schichten (130a; 130b; 130c) der CMOS-Struktur ausgebildet wird.

## Claims

1. A chip for analyzing a medium, comprising:
an organic light emitter (100) for emitting a light signal (105);
a photodetector (115) comprising a detector area (120);
a layer sequence (130) made of dielectric layers of a CMOS structure in which conductive metal planes (310b) of the CMOS structure are formed, separating the organic light emitter (100) and the detector area (120) and serving as a substrate for the organic light emitter (100); and
wherein the organic light emitter (100) and the photodetector (115) may be optically coupled by means of a path of rays of the light signal (105), and a reservoir (133) is arranged within the path of rays of the light signal (105), **characterized in that**:
the organic light emitter (100) is implemented as a bottom emitter in order to emit the light signal (105) through the layer sequence (130) serving as the substrate, and **in that** the chip comprises the reservoir (133) into which the medium may be introduced and which is implemented as a channel within the layer sequence (130) made of dielectric layers (130a; 130b; 130c) of the CMOS structure.

2. The chip as claimed in claim 1, comprising further organic light emitters and/or further photodetectors.

3. The chip as claimed in claim 2, wherein the further photodetectors exhibit spectral sensitivities which differ from the spectral sensitivity of the photodetector (115).

4. The chip as claimed in any of the preceding claims, wherein the photodetector (115) comprises an organic photovoltaic cell or an inorganic semiconductor as an active layer.

5. The chip as claimed in any of the preceding claims, further comprising a filter in the path of rays of the light signal (105).

6. The chip as claimed in claim 5, wherein the organic light emitter (100) is configured to emit the light signal (105) within a spectral range, and wherein the filter is implemented to filter out the spectral range and to allow a spectral range to which the photodetector (115) is sensitive to pass.

7. The chip as claimed in any of the preceding claims, wherein the organic light emitter (100) is implemented to emit the light signal (105) within a spectral range, and wherein the photodetector (115) is sensitive to incident light (105') within a further spectral range, the spectral range deviating from the further spectral range.

8. The chip as claimed in any of the preceding claims, wherein the organic light emitter (100) comprises a multitude of stacked light-emitting diodes, the stacked light-emitting diodes being implemented to emit light, so that a superposition of the light emitted by the stacked light-emitting diodes yields white light.

9. The chip as claimed in any of the preceding claims, wherein the organic light emitter (100) is implemented to emit the light signal (105) within a spectral range, and which further comprises a further organic light emitter, the further organic light emitter being implemented to emit light within a further spectral range, the spectral range differing from the further spectral range.

10. The chip as claimed in any of the preceding claims, wherein the organic light emitter (100) is implemented to emit pulsed light signals.

11. The chip as claimed in any of the preceding claims, further comprising an evaluation and control unit (540), the evaluation and control unit (540) being integrated on an identical substrate as the photodetector (115).

12. The chip as claimed in any of the preceding claims, wherein the reservoir comprises cavities which represent microresonators so that radiation emanating from the medium may be influenced or changed by a standing wave within the microresonators.

13. The chip as claimed in any of the preceding claims, comprising a further reservoir and a further photodetector, the further reservoir being spatially separate from the reservoir (133) and being optically couplable to the further photodetector, and the further photodetector comprising a spectral sensitivity which deviates from that of the photodetector (115).

14. Utilization of a chip as claimed in any of the preceding claims as a lab-on-chip sensor, as a fluorescence sensor or as a spectral sensor.

15. A method of manufacturing a chip for analyzing a medium, the method comprising:
implementing a photodetector (115) comprising a detector area (120);
implementing a layer sequence (130) made of dielectric layers (130a; 130b; 130c) of a CMOS structure on the detector area (120) of the photodetector (115), wherein conductive metal planes (310b) of the CMOS structure are formed in the layer;
implementing an organic light emitter (100) for emitting a light signal (105), the layer sequence (130) serving as a substrate for the organic light emitter (100), and the layer sequence (130) being arranged between the organic light emitter (100) and the detector area (120); and
wherein the organic light emitter (100) and the photodetector (115) are implemented such that a path of rays of the light signal (105) optically couples the organic light emitter (100) and the photodetector (115), and wherein a reservoir (133) is implemented within the path of rays of the light signal (105), **characterized in that** the organic light emitter (100) is implemented as a bottom emitter in order to emit the light signal (105) through the layer sequence (130) serving as the substrate, and **in that** the reservoir (133) into which the medium may be introduced is implemented as a channel within the layer sequence (130) made of dielectric layers (130a; 130b; 130c) of the CMOS structure.

## Revendications

1. Puce destinée à l'analyse d'un milieu, aux caractéristiques suivantes:
un émetteur de lumière organique (100) destiné à émettre un signal lumineux (105);
un photodétecteur (115) présentant une surface de détection (120);
une succession de couches (130) composée de couches diélectriques d'une structure CMOS dans lesquelles sont formés des étages conducteurs métalliques (310b) de la structure CMOS, qui sépare l'émetteur de lumière organique (100) et la surface de détection (120) et sert de substrat pour l'émetteur de lumière organique (100); et
dans lequel l'émetteur de lumière organique (100) et le photodétecteur (115) peuvent être couplés optiquement par un trajet de faisceau du signal lumineux (105) et un réservoir (133) est disposé dans le trajet du faisceau du signal lumineux (105),
**caractérisé par le fait que** l'émetteur de lumière organique (100) est réalisé sous forme d'émetteur de fond, pour émettre le signal lumineux (105) à travers la succession de couches (130) servant de substrat et que la puce présente le réservoir (133) dans lequel peut être introduit le support et qui est réalisé sous forme de canal dans la séquence de couches (130) composée de couches diélectriques (130a; 130b; 130c) de la structure CMOS.

2. Puce selon la revendication 1 présentant d'autres émetteurs de lumière organiques et/ou d'autres photodétecteurs.

3. Puce selon la revendication 2, dans laquelle les autres photodétecteurs présentent une sensibilité spectrale qui diffère de la sensibilité spectrale du photodétecteur (115).

4. Puce selon l'une des revendications précédentes, dans laquelle le photodétecteur (115) présente une cellule photovoltaïque organique ou un semi-conducteur inorganique comme couche active.

5. Puce selon l'une des revendications précédentes, présentant par ailleurs un filtre dans le trajet de faisceau du signal lumineux (105).

6. Puce selon la revendication 5, dans laquelle l'émetteur de lumière organique (100) est conçu pour émettre le signal de lumière (105) dans une plage spectrale, et dans laquelle le filtre est réalisé pour filtrer la plage spectrale et laisser passer une plage spectrale à laquelle est sensible le photodétecteur (115).

7. Puce selon l'une des revendications précédentes, dans laquelle l'émetteur de lumière organique (100) est conçu pour émettre le signal lumineux (105) dans une plage spectrale, et dans laquelle le photodétecteur (115) est sensible à la lumière incidente (105') dans une autre plage spectrale, la plage spectrale différant de l'autre plage spectrale.

8. Puce selon l'une des revendications précédentes, dans laquelle l'émetteur de lumière organique (100) présente une pluralité de diodes électroluminescentes empilées, les diodes électroluminescentes empilées étant réalisées pour émettre de la lumière de sorte qu'une superposition de la lumière émise par les diodes électroluminescentes empilées résulte en une lumière blanche.

9. Puce selon l'une des revendications précédentes, dans laquelle l'émetteur de lumière organique (100) est conçu pour émettre le signal lumineux (105) dans une plage spectrale, et présentant par ailleurs un autre émetteur de lumière organique, l'autre émetteur de lumière organique étant conçu pour émettre de la lumière dans une autre plage spectrale, la plage spectrale différant de l'autre plage spectrale.

10. Puce selon l'une des revendications précédentes, dans laquelle l'émetteur de lumière organique (100) est conçu pour émettre des signaux lumineux pulsés.

11. Puce selon l'une des revendications précédentes, présentant par ailleurs une unité d'évaluation et de commande (540), l'unité d'évaluation et de commande (540) étant intégrée sur un même substrat que le photodétecteur (115).

12. Puce selon l'une des revendications précédentes, dans laquelle le réservoir présente des cavités qui représentent des micro-résonateurs, de sorte qu'un rayonnement partant du milieu puisse être influencé ou modifié par une onde se trouvant dans les micro-résonateurs.

13. Puce selon l'une des revendications précédentes, présentant un autre réservoir et un autre photodétecteur, l'autre réservoir étant séparé spatialement du réservoir (133) et pouvant être couplé optiquement à l'autre photodétecteur, et l'autre photodétecteur présentant une sensibilité spectrale différant du photodétecteur (115).

14. Utilisation d'une puce selon l'une des revendications précédentes comme capteur de laboratoire sur puce, capteur de fluorescence, ou comme capteur spectral.

15. Procédé de fabrication d'une puce pour l'analyse d'un fluide, aux étapes suivantes consistant à:
réaliser un photodétecteur (115) présentant une surface de détection (120);
réaliser une succession de couches (130) composée de couches diélectriques (130a; 130b; 130c) d'une structure CMOS sur la surface de détection (120) du photodétecteur (115), dans la succession de couches étant formés des étages conducteurs métalliques (310b) de la structure CMOS;
réaliser un émetteur de lumière organique (100) destiné à émettre un signal lumineux (105), la succession de couches (130) servant de substrat pour l'émetteur de lumière organique (100) et la succession de couches (130) étant disposée entre l'émetteur de lumière organique (100) et la surface de détection (120); et
dans lequel l'émetteur de lumière organique (100) et le photodétecteur (115) sont réalisés de sorte qu'un trajet de faisceau du signal lumineux (105) couple optiquement l'émetteur de lumière organique (100) et le photodétecteur (115), et
dans lequel un réservoir (133) est réalisé dans le trajet de faisceau du signal lumineux (105),
**caractérisé par le fait que** l'émetteur de lumière organique (100) est réalisé sous forme d'un émetteur de fond pour émettre le signal lumineux (105) à travers la succession de couches (130) servant de substrat et que le réservoir (133) dans lequel peut être introduit le milieu est réalisé sous forme de canal dans la succession de couches (130) composée de couches diélectriques (130a; 130c; 130b) de la structure CMOS.
